(19) Europäisches Patentamt
European Patent Office
Office européen des brevets

(11) **EP 3 131 168 B1**

# (12) EUROPÄISCHE PATENTSCHRIFT

(45) Veröffentlichungstag und Bekanntmachung des Hinweises auf die Patenterteilung:
**26.09.2018 Patentblatt 2018/39**

(51) Int Cl.:
*H02J 3/00* (2006.01)     *G06Q 10/04* (2012.01)
*G06Q 50/10* (2012.01)

(21) Anmeldenummer: **15181070.2**

(22) Anmeldetag: **14.08.2015**

(54) **VERFAHREN UND ANORDNUNG FÜR DIE ERMITTLUNG VON MESSSTELLEN IN EINEM ENERGIENETZ**

METHOD AND ASSEMBLY FOR DETERMINING MEASUREMENT POINTS IN A POWER NETWORK

PROCEDE ET SYSTEME POUR LA DETERMINATION DE POINTS DE MESURE DANS UN RESEAU D'ENERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.02.2017 Patentblatt 2017/07**

(73) Patentinhaber: **Siemens Aktiengesellschaft 80333 München (DE)**

(72) Erfinder: **Blug, Dr. Christian 66287 Quierschied (DE)**

(56) Entgegenhaltungen:
- XIANG YU ET AL: "Optimization of State-Estimator-Based Operation Framework Including Measurement Placement for Medium Voltage Distribution Grid", IEEE TRANSACTIONS ON SMART GRID, IEEE, USA, Bd. 5, Nr. 6, 1. November 2014 (2014-11-01), Seiten 2929-2937, XP011561802, ISSN: 1949-3053, DOI: 10.1109/TSG.2014.2343672 [gefunden am 2014-10-17]
- CARLO MUSCAS ET AL: "Optimal Placement of Measurement Devices in Electric Distribution Systems", IEEE INSTRUMENTATION AND MEASUREMENT TECHNOLOGY CONFERENCE (IEEE CAT. NO. 06CH37714C)IMTC, IEEE, 1. April 2006 (2006-04-01), Seiten 1873-1878, XP031057016, DOI: 10.1109/IMTC.2006.235833 ISBN: 978-0-7803-9359-2

- LIU JUNQI ET AL: "Optimal Meter Placement for Robust Measurement Systems in Active Distribution Grids", IEEE TRANSACTIONS ON INSTRUMENTATION AND MEASUREMENT, IEEE SERVICE CENTER, PISCATAWAY, NJ, US, Bd. 63, Nr. 5, 1. Mai 2014 (2014-05-01), Seiten 1096-1105, XP011544542, ISSN: 0018-9456, DOI: 10.1109/TIM.2013.2295657 [gefunden am 2014-04-03]
- ABDELSALAM HANY A ET AL: "Impact of distribution system reconfiguration on optimal placement of phasor measurement units", 2014 CLEMSON UNIVERSITY POWER SYSTEMS CONFERENCE, IEEE, 11. März 2014 (2014-03-11), Seiten 1-6, XP032592180, DOI: 10.1109/PSC.2014.6808114 [gefunden am 2014-04-29]
- BORHANI BAHABADI H ET AL: "Optimal Placement of Phasor Measurement Units for Harmonic State Estimation in Unbalanced Distribution System Using Genetic Algorithms", SYSTEMS ENGINEERING (ICSENG), 2011 21ST INTERNATIONAL CONFERENCE ON, IEEE, 16. August 2011 (2011-08-16), Seiten 100-105, XP031977302, DOI: 10.1109/ICSENG.2011.26 ISBN: 978-1-4577-1078-0
- NUSRAT N ET AL: "Novel meter placement algorithm for enhanced accuracy of distribution system state estimation", 2012 IEEE POWER AND ENERGY SOCIETY GENERAL MEETING ; SAN DIEGO, CALIFORNIA, USA; 22 - 26 JULY 2012, IEEE, PISCATAWAY, NJ, 22. Juli 2012 (2012-07-22), Seiten 1-8, XP032465569, DOI: 10.1109/PESGM.2012.6344931 ISBN: 978-1-4673-2727-5

- **RAMESH L ET AL: "Planning optimal intelligent metering for distribution system monitoring and control", INDIA CONFERENCE, 2008. INDICON 2008. ANNUAL IEEE, IEEE, PISCATAWAY, NJ, USA, 11. Dezember 2008 (2008-12-11), Seiten 218-222, XP031414694, ISBN: 978-1-4244-3825-9**
- **JIE WAN ET AL: "Meter placement for load estimation in radial power distribution sytems", PROCEEDINGS / 2004 IEEE INTERNATIONAL SYMPOSIUM ON CIRCUITS AND SYSTEMS : MAY 23 - 26, 2004, SHERATON VANCOUVER WALL CENTRE HOTEL, VANCOUVER, BRITISH COLUMBIA, CANADA, IEEE OPERATIONS CENTER, PISCATAWAY, NJ, Bd. 5, 23. Mai 2004 (2004-05-23), Seiten 916-919, XP010720504, ISBN: 978-0-7803-8251-0**

**Beschreibung**

Die Erfindung betrifft ein Verfahren für die Ermittlung von Messstellen in einem Energienetz gemäß dem Oberbegriff des Anspruchs 1 sowie eine entsprechende Anordnung gemäß Anspruch 7.

Die am 29.07.2015 eingereichte europäische Patentanmeldung Nr. 15178794.2 beschäftigt sich mit einem Verfahren zur Nachrüstung eines elektrischen Energienetzes sowie Verfahren zur Optimierung eines bestehenden elektrischen Energienetzes.

Es wird in der o.g. Patentanmeldung ein mathematisches Modell des Energienetzes bereit gestellt, das eine Spannungsverteilung innerhalb des Energienetzes mittels eines Gleichungssystems und/oder Ungleichungssystems in Abhängigkeit von Anzahl und Position von zusätzlichen regelbaren Einrichtungen sowie von Regelstellungen aller regelbaren Einrichtungen berücksichtigt, und anhand des Modells eine Simulation zur Minimierung einer Zielfunktion durchgeführt, wobei die Zielfunktion Nachrüstungsaufwände und/oder Energieverluste durch die zusätzlichen regelbaren Einrichtungen berücksichtigt, und als Ergebnis der Simulation werden Anzahl und Position von zusätzlich benötigten regelbaren Einrichtungen sowie die Regelstellungen aller regelbaren Einrichtungen angegeben, damit das Energienetz im Betrieb ein vorgegebenes Spannungsband einhält. Das mathematische Modell wird in einer Variante dahingehend weiter entwickelt, dass auch eine Weitbereichsregelung eines bestehenden Energienetzes simuliert werden kann, um Regelstellungen eines Umspannwerktransformators zu ermitteln, mit denen ein vorgegebenes Spannungsband (i.d.R. +/-10% der Nennspannung des Energienetzes) eingehalten werden kann.

Somit besteht eine Möglichkeit, die Einhaltung der Spannungsgrenzen in öffentlichen Netzen mit stark heterogener Energieerzeuger- und Energieverbraucherstruktur einzuhalten, bzw. zu überwachen, in einer Weitbereichsregelung (WBR). Hierbei werden anhand von kontinuierlichen betrieblichen Spannungsmessungen an ausgewählten Messpunkten bzw. Messstellen im Netz die Einstellwerte für einen Stufenschalter eines Umspannwerktransformators ermittelt.

Nachteilig bei der Weitbereichsregelung sind die damit verbundenen Kosten sowie die Unsicherheit, ob die bisher durch Messung in Feldversuchen und anschließender langwieriger Messkampagne ermittelten Messstellen wirklich geeignet sind. Insbesondere ist durch das Ausprobieren von Messstellen nicht nachgewiesen, dass mit den gefundenen Messstellen alle Betriebsfälle des Energienetzes (z.B. hohe Last oder hohe dezentrale Einspeisung) hinreichend beschrieben werden können, um eine sichere und effiziente WBR vorzunehmen.

Ausgehend von bisherigen Ansätzen, bei denen Messstellen für eine Weitbereichsregelung durch Versuche im physischen Energienetz ermittelt wurden, stellt sich an die Erfindung die Aufgabe, Messstellen für die Weitbereichsregelung vergleichsweise mit geringem Aufwand und Kosten zu ermitteln.

Aus der Veröffentlichung "Optimization of State-Estimator-Based Operation Framework including Measurement Placement for Medium Voltage Distribution Grid" von Yu XIANG et al., IEEE Transactions on Smart Grid, Vol. 5, No. 6, November 2014, ist ein Verfahren zur Ermittelung einer minimalen Anzahl von Messstellen in einem Energieverteilungsnetz bekannt. Der Aufsatz beschreibt ein Verfahren auf der Basis der sog. "State Estimation" (Zustandsschätzung), um die minimale Anzahl von Messtellen im Netz zu ermitteln, so dass der sog. "Estimationsfehler" minimiert werden kann. Ferner ist aus der Veröffentlichung "Optimal Placement of Measurement Devices in Electric Distribution Systems" von Carlos Muscas et al., IMTC 2006 - Instrumentation and Measurement Technology Conference, Sorrento, Italien, 27-27 April 2006, ein Verfahren bekannt, bei dem ebenalls mittels State Estimation (Zustandsschätzung) eine minimale Anzahl von Messstellen in einem Energienetz ermittelt wird.

Die Erfindung löst diese Aufgabe durch ein Verfahren gemäß Anspruch 1.

Es ist ein Vorteil des erfindungsgemäßen Verfahrens, dass im Sinne einer Vermeidung unnötiger technischer Aufwände und entsprechender Kosten eine Mindestmenge an Messstellen ermittelt wird, um eine vollständige WBR zu ermöglichen und gleichzeitig die Einhaltung eines vorgegebenen Spannungsbandes, z.B. 90 % bis 110 % der Nennspannung, sicher zu stellen.

Es werden bei der Simulation für alle Regelstellungen der regelbaren Einrichtung und jeweils für alle Knotenpunkte im Energienetz die folgenden Schritte wiederholt:

- Aufheben der Bedingung im Gleichungssystems und/oder Ungleichungssystems, dass ein vorgegebenes Spannungsband eingehalten werden muss, für den jeweiligen Knotenpunkt, und
- Durchführung der Simulation, und
- Hinzufügen des jeweiligen Knotenpunkts zur Menge der mindestens erforderlichen Messstellen, wenn das Ergebnis der der Simulation ergibt, dass das vorgegebene Spannungsband am jeweiligen Knotenpunkt verletzt wurde.

Knotenpunkte im Energienetz sind beispielsweise Anschlusspunkte für Netzzweige, Lasten wie Gebäude oder Energieeinspeiser wie Photovoltaikanlagen.

Handelt es sich um einen Knotenpunkt, an dem das Spannungsband verletzt wird, so muss dieser Knoten mittels einer Messstelle überwacht werden.

Es ist ein Vorteil dieser Ausführungsform, dass durch ein vergleichsweise einfaches "Durchkombinieren" der Erforderlichkeit einer Messstelle für alle Knotenpunkte schnell und sicher eine minimale Anzahl von Messstellen ermittelt werden kann, was Kosten und Installationsaufwände einspart.

In einer bevorzugten Ausführungsform des erfindungsgemäßen Verfahrens werden an den ermittelten Positionen im Energienetz jeweils Spannungsmesseinrichtungen installiert. Dies ist ein Vorteil, weil so im Betrieb des Energienetzes eine Weitbereichsregelung durchgeführt werden kann, bei der das gesamte Netz ständig auf die Einhaltung des vorgegebenen Spannungsbandes überwacht werden kann.

In einer bevorzugten Ausführungsform des erfindungsgemäßen Verfahrens wird die regelbare Einrichtung auf eine Regelstellung eingestellt, die gemäß dem Ergebnis eine minimale Anzahl von Messstellen erfordert. Dies ist ein Vorteil, weil Kosten und Aufwände für nicht benötigte Messstellen eingespart werden und sicher gestellt ist, dass das gesamte Energienetz auf Spannungsbandverletzungen überwacht werden kann.

In einer bevorzugten Ausführungsform des erfindungsgemäßen Verfahrens wird als regelbare Einrichtung ein regelbarer Umspannwerktransformator eingesetzt. Dies ist ein Vorteil, weil eine Weitbereichsregelung häufig bei Transformatoren, die eine Mittelspannung in eine Niederspannung transformieren, eingesetzt wird.

Besonders bevorzugt ist es, wenn der Umspannwerktransformator dynamisch, also unter Last, seine Regelstellung ändern kann.

In einer bevorzugten Ausführungsform des erfindungsgemäßen Verfahrens wird als regelbare Einrichtung ein regelbarer Ortsnetzransformator (RONT) eingesetzt. Dies ist ein Vorteil, weil auf diese Weise eine WBR eines dem RONT nachgeordneten Teil-Energienetzes auf der Niederspannungsebene durchgeführt werden kann.

In einer bevorzugten Ausführungsform des erfindungsgemäßen Verfahrens wird als regelbare Einrichtung ein Netzregler eingesetzt. Dies ist ein Vorteil, weil auf diese Weise eine WBR eines dem Netzregler nachgeordneten Teil-Energienetzes, z.B. auf der Niederspannungsebene, durchgeführt werden kann.

Ferner stellt sich ausgehend von bisherigen Ansätzen, bei denen Messstellen für eine Weitbereichsregelung durch Versuche im physischen Energienetz ermittelt wurden, an die Erfindung die Aufgabe, eine Anordnung für die Ermittlung von Messstellen für die Weitbereichsregelung bereit zu stellen, die vergleichsweise mit geringem Aufwand und Kosten Messstellen angibt.

Die Erfindung löst diese Aufgabe durch eine Anordnung gemäß Anspruch 7. Es ergeben sich dabei für die erfindungsgemäße Anordnung und ihre bevorzugten Ausführungsformen gemäß den abhängigen Ansprüchen 8 bis 10 jeweils sinngemäß die gleichen Vorteile wie eingangs für das erfindungsgemäße Verfahren erläutert.

Als Simulationseinrichtung kann z.B. eine Hardwarekomponente wie eine Rechnereinrichtung mit geeigneter Software eingesetzt werden. Die Simulationseinrichtung kann auch als reine Softwarekomponente ausgebildet sein und z.B. lokal zur Anwendung auf einem PC geeignet sein. Alternativ kann die Simulationseinrichtung auch als Cloud-Anwendung ausgebildet sein.

Zur weiteren Erläuterung der Erfindung wird im folgenden Ausführungsbeispiel eine bevorzugte und vorteilhafte Ausführungsform der Erfindung beschrieben.

Es wird in der nachfolgenden Beschreibung auf ein Energienetz mit einem dynamisch regelbaren Umspannwerktransformator und zahlreichen Knotenpunkten auf einer Mittel- oder Niederspannungsebene eingegangen. Es soll ermittelt werden, an welchen Knotenpunkten im Netz Messstellen installiert werden müssen, damit sowohl Betriebszustände mit hoher Einspeisung von elektrischer Energie - z.B. durch Photovoltaikanlagen - sowie Betriebszustände mit hoher Last beherrscht werden können, ohne dass an beliebiger Stelle im Energienetz ein vorgegebenes Spannungsband verletzt wird.

Ausgangspunkt des Lösungsansatzes ist ein lineares, aber komplexes Lastflussproblem gemäß $\underline{i} = \underline{Y} * \underline{u}$ in einer Darstellung mit Hilfe der so genannten Systemadmittanzmatrix. Der Knotenvektor i wird dabei in die Teilströme $\underline{i}_{G,i}$ für den generatorischen Beitrag und $\underline{i}_{L,i}$ für den Lastanteil am Knoten i zerlegt. Weiterhin bezeichnen die Indizes w den Realteil (Wirkanteil) und b den Imaginärteil (Blindanteil) der komplexen Spannung, bzw. des komplexen Stromes. g und b beschreiben entsprechend den Wirk- und Blindleitwert eines Elements der komplexen Leitwertmatrix Y (Gleichungen 1 bis 4).

Daraus folgen jeweils ein Gleichungssystem für den Real- und Imaginärteil (Gl. 4,5). Dieses Gleichungssystem ist nach den Real- und Imaginärteilen der Knotenspannungen aufzulösen. Nun ist noch der Betrag zu linearisieren (Gl. 6 bis 9).

Bei einem üblichen Flat-Start ($u_{w,i,0} = u_n$ und $u_{b,i,0} = 0$) können die Blindleistungsterme vernachlässigt werden, es ergibt sich als Näherungslösung für den Betrag der Knotenspannung die Größe $u_{w,i}$. Je kleiner die Knotenwinkel der exakten Lösung sind, umso genauer ist auch die Näherungslösung. Die Knotenströme der Gleichungen 4 und 5 werden aus den Flat-Start-Spannungen ermittelt.

Zur Lösung der Gleichungen wird von einem linearen Lastfluss ausgegangen, der die komplexen Knotenspannungen zu den komplexen Knotenströmen in Beziehung setzt. Weiterhin wird an dieser Stelle der Einfachheit halber davon ausgegangen, dass der Stufenschalter im Umspannwerk das einzige dynamische Regelelement ist. Im Netz vorhandene Netzregler können analog behandelt werden, um so mittels der hier vorgestellten Verfahrens einen dem Netzregler nachgeordneten Netzzweig auf der gleichen Spannungsebene zu regeln. Gleiches für ggf. vorhandene regelbare Ortsnetztransformatoren (RONT).

Gesucht sind diejenigen Messstellen, deren Beobachtung ausreicht, um die Spannungsbedingungen - z.B. +/- 10 % der Nennspannung - für alle Betriebsfälle einzuhalten. Diese Betriebszustände sind alle möglichen Kombinationen von Last- und Erzeugerströmen sowie alle möglichen Stellungen des Stufenschalters bei Einhaltung des vorgegebenen Spannungsbandes.

Die Lastflussgleichungen ergeben sich aus den Gleichung 4, 5 und 9. Dabei sollen Nebenbedingungen für jeden Knotenstrom gelten (Gl. 10,11). Im vorliegenden Beispiel soll das vorgegebene Spannungsband 90 % bis 110 % der Nennspannung betragen.

Da die Kontenspannungen mit expliziten Messstellen werden, muss bei ihnen Gleichung 12 gelten.

Es wird angenommen, dass die beiden Extremfälle max. Last und max. Erzeugung mit Regelstellungen im Umspannwerkstransformator beherrscht werden können. Dann existiert für alle anderen Stufenschalterstellungen zumindest ein Knotenstromzustand, der ebenfalls die Spannungsbedingungen einhält und daher beherrscht werden kann. Für alle anderen Knotenstromzustände wird die Verletzung des Spannungsbandes an einem Knoten i pönalisiert (Gl. 13).

Die additive Konstante $\varepsilon$ sollte klein gegen die jeweilige Spannungsgrenze sein. Hiermit wird garantiert, dass bei Erreichen einer Spannungsgrenze eines Knotens mit definierter Spannungsrestriktion gemäß Gleichung 12 andere Knoten mit topologisch bedingt gleicher Spannung nicht pönalisiert werden.

Hiermit können nun zwei Optimierungsprobleme formuliert werden. Die jeweiligen Zielfunktionen ergeben sich gemäß Gleichungen 14 und 15.

Wird als Zielfunktion die Gleichung 14 eingesetzt, so werden die Knotenströme durch Optimierung immer so gewählt, dass sich keine Spannungsbandverletzung ergibt. Solche Betriebsfälle existieren immer dann, wenn der Stufenschalter eine Position zwischen seinen Extremstellungen aufweist. Zur Bestimmung der optimalen Messstellen sollen noch zwei Definitionen vorgestellt werden.

Definition 1: Ein Netzknoten wird explizit beobachtbar genannt, wenn die Einhaltung des zulässigen Spannungsbandes an diesem Knoten durch die lokale Messung seiner Knotenspannung und die dadurch gesteuerte Ausregelung garantiert wird.

Definition 2: Ein Netzknoten wird implizit beobachtbar genannt, wenn die Einhaltung des zulässigen Spannungsbandes an diesem Knoten durch die explizite Beobachtbarkeit eines oder mehrerer anderen Netzknoten garantiert wird und daher an dem betreffenden Knoten keine Spannungsmessung erforderlich ist.

Es muss nun das Ziel einer WBR-Planung sein, die Anzahl der erforderlichen Messstellen und damit die Anzahl der explizit beobachtbaren Netzknoten zu minimieren, ohne dass sich dabei für einen beliebigen Last- oder Erzeugungsfall eine Spannungsbandverletzung eines nicht direkt gemessenen Netzknotens ergibt.

Eine Überprüfung der impliziten Beobachtbarkeit leistet die Gleichung 15.

Eine explizite Messstelle wird im Optimierungsproblem dadurch eine implizite Messstelle, dass an diesem Netzknoten die Spannungsnebenbedingung nach Gl. 12 weggelassen werden kann, ohne dass die Spannung an diesem Knoten unzulässige Werte erreichen kann. Durch eine Maximierung der Zielfunktion ermittelt die Optimierung nun denjenigen Stromvektor, bei dem - falls dieser existiert - die Spannungsbedingungen verletzt werden. Hat die Zielfunktion auch bei Wegfall der Spannungsbedingung den Wert Null, so ist der Netzknoten implizit beobachtbar. Es ergibt sich folgender Algorithmus:

$$\Omega \ = \ \{\ \}$$

1) Für alle Regelstellungen r aus $\{r_{min}, ..., r_{max}\}$ des Spannungsreglers im Umspannwerk werden die folgenden Schritte wiederholt:

2) Lösungsmenge $\Omega = \{\}$

3) Für alle Knoten i des Netzes wird wiederholt:

- Entferne Spannungsnebenbedingung 12
- Löse Optimierungsproblem Gleichung 15
- Für O > 0 ist $\Omega_r = \Omega_r$ **U**{$i$}, stelle Bedingung wieder her oder Für O $\leq$ 0 ist Netzknoten implizit beobachtbar

Es ergibt sich die Lösungsmenge $\Omega$ **=** $\Omega_{r,min}$ **U ... U** $\Omega_{r,max}$

Die Lösungsmenge enthält nun alle Knoten, die für alle Zwischenbetriebsfälle explizit beobachtbar sein müssen und damit eine eigene Spannungsüberwachung benötigen. Die Teiloptimierungsprobleme sind linear und weisen in den Lastflussgleichungen kontinuierliche Variablen auf, die durch binäre Variablen zur Betragsbildung ergänzt werden. Damit können diese Probleme mit den Verfahren der gemischt-ganzzahligen Optimierung gelöst werden, wie sie z.B. aus dem Buch "Angewandte Optimierung" von Jozsef Varga, 1991 bekannt sind.

Der Rechenaufwand für die äußere (Schritt 1. im Algorithmus) und die innere Iteration (Schritt 3. im Algorithmus) wächst nur proportional mit der Anzahl der Regelstufen bzw. der Anzahl der zu untersuchenden potentiellen Messstellen. Der Berechnungsaufwand kann für die Lösung des Gleichungssystems nach Gleichung 15 minimiert werden, wenn nach der Ermittlung der ersten auftretenden Lösung mit einem Zielfunktionswert O größer Null abgebrochen wird. Das Verfahren liefert daher im Rahmen der Modellgenauigkeit der linearen Lastflussberechnung die optimale Messstellentopologie für die WBR.

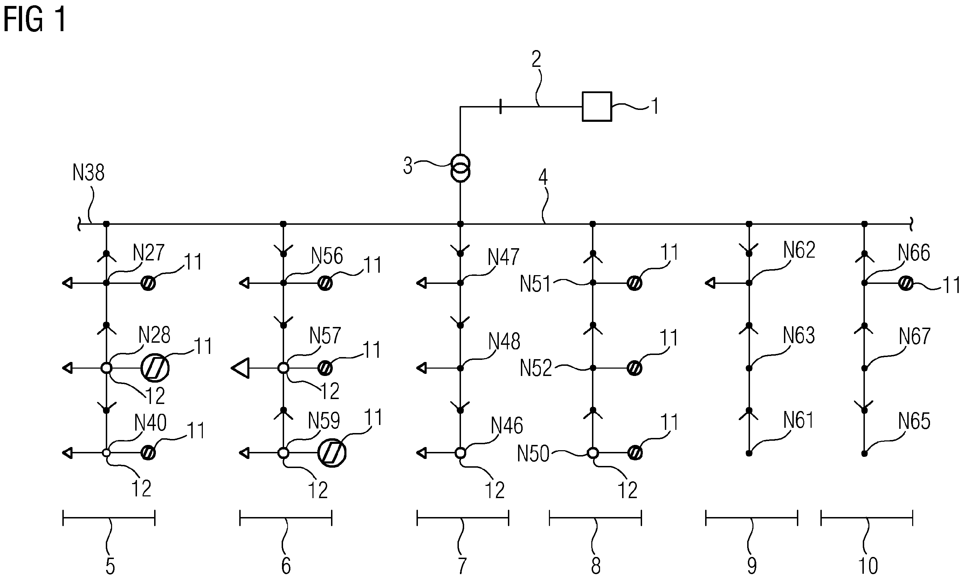

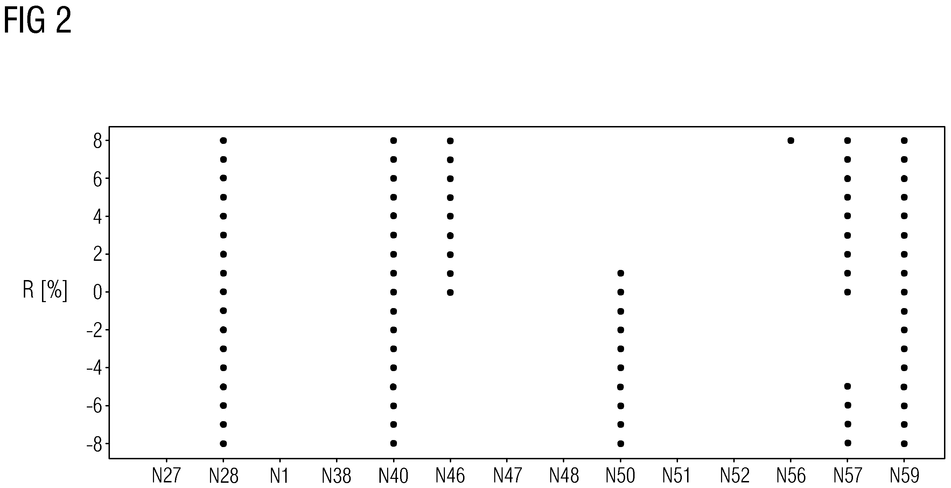

Im Folgenden zeigen die Figuren 1 und 2 eine Anwendung des Ansatzes gemäß dem Ausführungsbeispiel der Erfindung.

Es zeigen in schematischer Darstellung

Figur 1    ein Beispiel für ein Energienetz und

Figur 2    eine Übersicht über die mit dem erfindungsgemäßen Verfahren ausgewerteten Messstellen im Energienetz gemäß Figur 1.

Die Figur 1 zeigt ein Beispiel für ein Energienetz mit einer Mittelspannungsquelle 1 (einem Netzanschluss) und einem Niederspannungstransformator 3, der in Stufen von -8 % bis +8 % der Nennspannung der Niederspannungsebene 4 regelbar ist. Das Beispielnetz weist Knoten N auf, an denen z.B. mit Pfeilen markierte Abgänge als Lasten und mit Solarmodulen repräsentierte Einspeisevorrichtungen 11 für elektrische Energie vorhanden sind.

Es werden sechs Netzzweige 5,6,7,8,9,10 dargestellt, die unterschiedliche charakteristische Belastungen aufweisen.

Netzzweig 5: Abgang mit heterogener Zusammensetzung aus Erzeugung und Verbrauch;
Netzzweig 6: Abgang mit heterogener Zusammensetzung aus Erzeugung und Verbrauch
Netzzweig 7: Abgang mit homogener Belastung
Netzzweig 8: Abgang mit homogener Einspeisung
Netzzweig 9: Abgang mit kleiner homogener Belastung
Netzzweig 10: Abgang mit kleiner homogener Erzeugung

Die mit der Optimierung ermittelten Spannungsmessstellen 12 sind im Netzplan durch dicker gezeichnete Knoten markiert. Es handelt sich um die Knoten N28,N40,N57,N59,N46,N50.

Die Anwendung der Optimierung ergibt für die Netzzweige 9 und 10 also keine erforderlichen Messstellen, da hier offensichtlich die Spannungsbedingungen aufgrund der Kleinheit der angeschlossenen Lasten und Erzeuger nicht verletzt werden können und die Knoten in diesen Zweigen implizit durch Beobachtung von Knoten in den anderen Zweigen überwacht werden können.

Bei den Netzzweigen 7 und 8 reicht aufgrund der Homogenität der angeschlossenen Lasten und Einspeisungen die Überwachung des jeweils letzten Netzknotens im Strang aus, um auch alle anderen Netzknoten des Stranges zu überwachen.

Bei den Netzzweigen 5 und 6 ist die Situation etwas schwieriger: Die Größe der Last- und Erzeugersymbole stellen die Höhe der jeweiligen Ströme dar. So kann es im Netzzweig 6 passieren, dass der Knoten N59 aufgrund des Spannungsanstiegs beobachtet werden muss. Der Knoten N57 hingegen kann die niedrigste Knotenspannung aufweisen, wenn am Knoten N59 gleichzeitig geringe Last und hohe Einspeisung auftritt. Somit muss auch an diesem Knoten die Spannung überwacht werden.

Im Netzzweig 5 ist die Lage umgekehrt: Hier muss der Knoten N40 aufgrund der Last überwacht werden. Es kann jedoch auch der Fall auftreten, dass bei vorwiegender Last bei N40 und überwiegender Einspeisung bei N28 die obere Spannungsgrenze überschritten wird, so dass dieser Knoten ebenfalls überwacht werden muss.

In der Figur 2 ist eine Übersicht über die mit dem erfindungsgemäßen Verfahren ausgewerteten Messstellen im Energienetz gemäß Figur 1 dargestellt. Es ist auf der horizontalen Achse für die Knoten N jeweils eine vertikale Linie gedacht. Auf der vertikalen Achse ist für jede Regelstellung R des Umspannwerktransformators angeben, um wie viel Prozent die Nennspannung erniedrigt oder erhöht wurde. Dabei ist für jede Stufe (prozentuale Abweichung R) eine horizontale Linie gedacht, entlang derer sich ein Raster von Kreuzpunkten ergibt, die entweder implizit oder explizit beobachtbar sein können. Explizit beobachtbare Knotenspannungen liegen vor, wenn ein Kreuzpunkt mit einem Punkt markiert ist. Diese Knotenpunkte müssen mit Messstellen überwacht werden. Je weniger Punkte auf einer horizontalen Linie liegen, desto weniger Messstellen sind folglich erforderlich.

Wird die regelbare Einrichtung wie z.B. ein regelbarer Umspannwerktransformator mit einer neutralen Stufenstellung betrieben, also einer Abweichung von R = 0 % vom Nennstrom, so ergeben sich die sechs Messstellen N28,N40,N57,N59,N46,N50, die bereits in der Figur 1 eingezeichnet wurden.

Die Übersicht zeigt, dass bei einer eingestellten Stufe im Umspannwerktransformator von - 1% bis -4 % lediglich vier Messstellen durch Messgeräte beobachtet werden müssen, nämlich N28,N40,N50 und N57. Damit wäre es im Beispielnetz optimal, den Umspannwerktransformator von - 1% bis -4 % einzustellen. Durch die Einsparung von zwei Messstellen im Beispielnetz können entsprechende Kosten für Installation, Wartung und Überwachung eingespart werden.

Der unterschiedliche Charakter der Netzknoten N46 und N50 zeigt sich hier deutlich: Aufgrund des Lastcharakters von N46 ist bei höheren Spannungssollwerten (negative Regelstufen) keine Messung erforderlich, während im von Erzeugern geprägten Abgang N50 gerade in solchen Fällen eine Überwachung notwendig ist. Somit müssen insgesamt 6 Knoten überwacht werden, wenn ein Regelbereich von 94 % bis 106 % (-6% bis 6%) durchfahren werden soll. Bei einem Spannungsregelbereich von 101 % bis 104 % ist die minimale Anzahl von 4 Messstellen erforderlich.

Gegebenenfalls sind im Rahmen eines Einspeisemanagements Einspeiser in den Strängen der Knoten N28, N46, N50 und N59 abzuregeln, wenn die oberen Grenzwerte in diesem Strängen erreicht werden.

Die Berücksichtigung von weiteren dynamischen Spannungsregeleinrichtungen wie regelbaren Ortsnetztransformatoren (RONT) kann näherungsweise dadurch geschehen, dass für alle Knoten im Nahbereich dieser Elemente nicht nur die Spannungsbedingung aufgegeben wird, sondern auch der Pönalisierungsterm zu Null gesetzt wird. Dies entspricht der Annahme, dass die Regeleinrichtung weitestgehend unabhängig von der Stufenschalterstellung im Umspannwerk die Regelaufgabe erfüllen kann.

Im Folgenden werden die Gleichungen, die der erfindungsgemäßen Lösung zugrunde liegen, aufgelistet. Die Nummerierung der Gleichungen entspricht dabei der Nummerierung in der voranstehenden Beschreibung.

$$\underline{i}_{G,i} - \underline{i}_{L,i} = (u_{w,i} + ju_{b,i})(g_{i,i} + jb_{i,i}) + \sum_{j\neq i}(g_{i,j} + jb_{i,j})(u_{w,j} + ju_{b,j}) \quad (1)$$

$$= u_{w,i}g_{i,i} - u_{b,i}b_{i,i} + j(u_{b,i}g_{i,i} + u_{w,i}b_{i,i}) - \quad (2)$$
$$\sum_{j\neq i}((g_{i,j}u_{w,j} - b_{i,j}u_{b,j}) + j(b_{i,j}u_{w,j} + g_{i,j}u_{b,j}))$$

$$= u_{w,i}g_{i,i} - u_{b,i}b_{i,i} + \sum_{j\neq i}(g_{i,j}u_{w,j} - b_{i,j}u_{b,j}) + \quad (3)$$
$$j(u_{b,i}g_{i,i} + u_{w,i}b_{i,i}) + \sum_{j\neq i}j(b_{i,j}u_{w,j} + g_{i,j}u_{b,j})$$

$$i_{w,G,i} - i_{w,L,i} = u_{w,i}g_{i,i} - u_{b,i}b_{i,i} + \sum_{j\neq i}(g_{i,j}u_{w,j} - b_{i,j}u_{b,j}) \quad (4)$$

$$i_{b,G,i} - i_{b,L,i} = u_{b,i}g_{i,i} + u_{w,i}b_{i,i} + \sum_{j\neq i}(b_{i,j}u_{w,j} + g_{i,j}u_{b,j}) \quad (5)$$

$$|u_{w,i} + ju_{b,i}| = \sqrt{u_{w,i}^2 + u_{b,i}^2} \quad (6)$$

$$= f(u_{w,i}, u_{b,i}) \quad (7)$$

$$= \sqrt{u_{w,i,0}^2 + u_{b,i,0}^2} + \frac{\delta f}{\delta u_{w,i}}du_{w,i} + \frac{\delta f}{\delta u_{b,i}}du_{b,i} \quad (8)$$

$$= \sqrt{u_{w,i,0}^2 + u_{b,i,0}^2} + \quad (9)$$

$$\frac{u_{w,i,0}}{\sqrt{u_{w,i,0}^2 + u_{b,i,0}^2}}(u_{w,i} - u_{w,i,0}) + \frac{u_{b,i,0}}{\sqrt{u_{w,i,0}^2 + u_{b,i,0}^2}}(u_{b,i} - u_{b,i,0})$$

$$\underline{i}_{j,maxLast} \quad \leq \quad \underline{i}_j \leq 0 \tag{10}$$

$$0 \quad \leq \quad \underline{i}_j \leq \underline{i}_{j,maxErzeugung} \tag{11}$$

$$90 \leq |\underline{u}_i| \leq 110 \tag{12}$$

$$p_i = \begin{cases} 1 & \text{für } |\underline{u}_i| \leq 90 + \varepsilon \\ 1 & |\underline{u}_i| \geq 110 + \varepsilon \\ 0 & \text{sonst} \end{cases} \tag{13}$$

$$O_{\min} \quad = \quad \text{Min} \sum_i p_i \tag{14}$$

$$O_{\max} \quad = \quad \text{Max} \sum_i p_i \tag{15}$$

**Patentansprüche**

1.  Verfahren für die Ermittlung von Messstellen (12) in einem Energienetz (13) mit stark heterogener Energieerzeuger- und Energieverbraucherstruktur, wobei im Energienetz (13) eine regelbare Einrichtung (3) für eine Weitbereichs-Spannungsregelung verwendet wird,
    wobei mittels einer Simulationseinrichtung
    ein Modell des Energienetzes (13) bereit gestellt wird, das eine Spannungsverteilung innerhalb des Energienetzes (13) mittels eines Gleichungssystems und/oder Ungleichungssystems in Abhängigkeit von der Regelstellung der regelbaren Einrichtung (3) angibt, und wobei
    mittels der Simulationseinrichtung anhand des Modells eine Simulation zur Minimierung der Anzahl von Messstellen (12) durchgeführt wird, und dass
    als Ergebnis der Simulation eine minimale Anzahl und die jeweilige Position von Messstellen (12) sowie die Regelstellung der regelbaren Einrichtung (3) angegeben werden, damit das Energienetz (13) im Betrieb ein vorgegebenes Spannungsband einhält,
    **dadurch gekennzeichnet, dass**
    bei der Simulation für alle Regelstellungen der regelbaren Einrichtung (3) und jeweils für alle Knotenpunkte (N) im Energienetz (13) die folgenden Schritte wiederholt werden:

    - Aufheben der Bedingung im Gleichungssystems und/oder Ungleichungssystems, dass ein vorgegebenes Spannungsband eingehalten werden muss, für den jeweiligen Knotenpunkt (N), und
    - Durchführung der Simulation, und
    - Hinzufügen des jeweiligen Knotenpunkts (N) zur Menge der mindestens erforderlichen Messstellen (12), wenn das Ergebnis der Simulation ergibt, dass das vorgegebene Spannungsband am jeweiligen Knotenpunkt (N) verletzt wurde.

2.  Verfahren nach Anspruch 1, **dadurch gekennzeichnet, dass** an den ermittelten Positionen (12) im Energienetz (13) jeweils Spannungsmesseinrichtungen installiert werden.

3.  Verfahren nach einem der vorhergehenden Ansprüche, **dadurch gekennzeichnet, dass** die regelbare Einrichtung (3) auf eine Regelstellung eingestellt wird, die gemäß dem Ergebnis eine minimale Anzahl von Messstellen (12) erfordert.

4.  Verfahren nach einem der vorhergehenden Ansprüche, **dadurch gekennzeichnet, dass** als regelbare Einrichtung (3) ein regelbarer Umspannwerktransformator eingesetzt wird.

**5.** Verfahren nach einem der Ansprüche 1 bis 3, **dadurch gekennzeichnet, dass** als regelbare Einrichtung (3) ein Netzregler eingesetzt wird.

**6.** Verfahren nach einem der Ansprüche 1 bis 3, **dadurch gekennzeichnet, dass** als regelbare Einrichtung (3) ein regelbarer Ortsnetztransformator eingesetzt wird.

**7.** Anordnung für die Ermittlung von Messstellen (12) in einem Energienetz (13) mit stark heterogener Energieerzeuger- und Energieverbraucherstruktur, wobei im Energienetz (13) eine regelbare Einrichtung (3) für eine Weitbereichs-Spannungsregelung verwendbar ist,
umfassend eine Simulationseinrichtung,
die zur Bereitstellung eines Modells des Energienetzes (13) ausgebildet ist, wobei das Modell eine Spannungsverteilung innerhalb des Energienetzes (13) mittels eines Gleichungssystems und/oder Ungleichungssystems in Abhängigkeit von der Regelstellung der regelbaren Einrichtung (3) angibt, und dass die Simulationseinrichtung ausgebildet ist, anhand des Modells eine Simulation zur Minimierung der Anzahl von Messstellen (12) durchzuführen, und wobei die Simulationseinrichtung ausgebildet ist, als Ergebnis der Simulation eine minimale Anzahl und die jeweilige Position von Messstellen (12) sowie die Regelstellung der regelbaren Einrichtung (3) anzugeben, damit für das Energienetz (13) im Betrieb ein vorgegebenes Spannungsband einhaltbar ist, **dadurch gekennzeichnet, dass** die Simulationseinrichtung ausgebildet ist, bei der Simulation für alle Regelstellungen der regelbaren Einrichtung (3) und jeweils für alle Knotenpunkte (N) im Energienetz (13) die folgenden Schritte zu wiederholen:

- Aufheben der Bedingung im Gleichungssystems und/oder Ungleichungssystems, dass ein vorgegebenes Spannungsband eingehalten werden muss, für den jeweiligen Knotenpunkt (N), und
- Durchführung der Simulation, und
- Hinzufügen des jeweiligen Knotenpunkts (N) zur Menge der mindestens erforderlichen Messstellen (12), wenn das Ergebnis der der Simulation ergibt, dass das vorgegebene Spannungsband am jeweiligen Knotenpunkt (N) verletzt wurde.

**8.** Anordnung nach Anspruch 7, **dadurch gekennzeichnet, dass** die Anordnung ein Energienetz (13) umfasst und an den ermittelten Positionen (12) im Energienetz (13) jeweils Spannungsmesseinrichtungen vorgesehen sind.

**9.** Anordnung nach einem der Ansprüche 7 oder 8, **dadurch gekennzeichnet, dass** eine regelbare Einrichtung (3) vorgesehen ist, die auf eine Regelstellung eingestellt ist, wobei die Regelstellung gemäß dem Ergebnis eine minimale Anzahl von Messstellen (12) erfordert.

**10.** Anordnung nach einem der Ansprüche 7 bis 10, **dadurch gekennzeichnet, dass** die regelbare Einrichtung (3) einen regelbaren Umspannwerktransformator umfasst.

**11.** Anordnung nach einem der Ansprüche 7 bis 10, **dadurch gekennzeichnet, dass** die regelbare Einrichtung (3) einen Netzregler umfasst.

**12.** Anordnung nach einem der Ansprüche 7 bis 10, **dadurch gekennzeichnet, dass** die regelbare Einrichtung (3) einen regelbaren Ortsnetztransformator (RONT) umfasst.

**Claims**

**1.** Method for determining measurement locations (12) in an energy grid (13) having a greatly heterogeneous energy generator and energy consumer structure, wherein in the energy grid (13) use is made of a controllable device (3) for a wide-range voltage control,
wherein, by means of a simulation device,
a model of the energy grid (13) is provided which specifies a voltage distribution within the energy grid (13) by means of a system of equations and/or system of inequalities depending on the control position of the controllable device (3), and wherein,
by means of the simulation device, a simulation for minimizing the number of measurement locations (12) is carried out on the basis of the model, and in that
as a result of the simulation a minimum number and the respective position of measurement locations (12) and also the control position of the controllable device (3) are specified in order that the energy grid (13) complies with a predefined voltage band during operation,

**characterized in that**
during the simulation for all control positions of the controllable device (3) and in each case for all nodes (N) in the energy grid (13) the following steps are repeated:

- cancelling the condition in the system of equations and/or system of inequalities that a predefined voltage band must be complied with, for the respective node (N), and
- carrying out the simulation, and
- adding the respective node (N) to the set of the measurement locations (12) required at a minimum, if the result of the simulation reveals that the predefined voltage band was violated at the respective node (N).

2. Method according to Claim 1, **characterized in that** voltage measuring devices are in each case installed at the determined positions (12) in the energy grid (13).

3. Method according to either of the preceding claims, **characterized in that** the controllable device (3) is set to a control position which requires a minimum number of measurement locations (12) in accordance with the result.

4. Method according to any of the preceding claims, **characterized in that** a controllable substation transformer is used as the controllable device (3).

5. Method according to any of Claims 1 to 3, **characterized in that** a grid controller is used as the controllable device (3) .

6. Method according to any of Claims 1 to 3, **characterized in that** a controllable local grid transformer is used as the controllable device (3).

7. Arrangement for determining measurement locations (12) in an energy grid (13) having a greatly heterogenous energy generator and energy consumer structure, wherein in the energy grid (13) use can be made of a controllable device (3) for a wide-range voltage control,
comprising a simulation device,
which is designed for providing a model of the energy grid (13), wherein the model specifies a voltage distribution within the energy grid (13) by means of a system of equations and/or system of inequalities depending on the control position of the controllable device (3), and in that the simulation device is designed to carry out a simulation for minimizing the number of measurement locations (12) on the basis of the model, and
wherein the simulation device is designed
to specify as a result of the simulation a minimum number and the respective position of measurement locations (12) and also the control position of the controllable device (3) in order that a predefined voltage band can be complied with for the energy grid (13) during operation, **characterized in that** the simulation device is designed
to repeat during the simulation for all control positions of the controllable device (3) and in each case for all nodes (N) in the energy grid (13) the following steps:

- cancelling the condition in the system of equations and/or system of inequalities that a predefined voltage band must be complied with, for the respective node (N), and
- carrying out the simulation, and
- adding the respective node (N) to the set of the measurement locations (12) required at a minimum, if the result of the simulation reveals that the predefined voltage band was violated at the respective node (N).

8. Arrangement according to Claim 7, **characterized in that** the arrangement comprises an energy grid (13) and voltage measuring devices are in each case provided at the determined positions (12) in the energy grid (13).

9. Arrangement according to either of Claims 7 and 8, **characterized in that** a controllable device (3) is provided which is set to a control position, wherein the control position requires a minimum number of measurement locations (12) in accordance with the result.

10. Arrangement according to any of Claims 7 to 10, **characterized in that** the controllable device (3) comprises a controllable substation transformer.

11. Arrangement according to any of Claims 7 to 10, **characterized in that** the controllable device (3) comprises a grid controller.

**12.** Arrangement according to any of Claims 7 to 10, **characterized in that** the controllable device (3) comprises a controllable local grid transformer (CLGT).

**Revendications**

**1.** Procédé de détermination de points (12) de mesure dans un réseau (13) d'énergie, ayant une structure très hétérogène de producteurs d'énergie et de consommateurs d'énergie, dans lequel on utilise, dans le réseau (13) d'énergie, un dispositif (13) réglable pour une régulation de tension dans un grand domaine,

dans lequel, au moyen d'un dispositif de simulation, on met à disposition un modèle du réseau (13) d'énergie, qui indique une répartition de tension au sein du réseau (13) d'énergie, au moyen d'un système d'équations et/ou d'un système d'inéquations en fonction de la position de réglage du dispositif (3) réglable et dans lequel

au moyen du dispositif de simulation, on effectue, à l'aide du modèle, une simulation pour minimiser le nombre de points (12) de mesure et en ce que

en résultat de la simulation, on indique un nombre minimum et la position respective de points (12) de mesure, ainsi que la position de réglage du dispositif (3) réglable, afin que le réseau (13) d'énergie respecte en fonctionnement une bande de tension donnée à l'avance,

**caractérisé en ce que**

dans la simulation, on répète, pour toutes les positions de réglage du dispositif (3) réglable et respectivement pour tous les points (N) nodaux du réseau (13) d'énergie, les stades suivants :

- suppression de la condition du système d'équations et/ou du système d'inéquations qu'une bande de tension donnée à l'avance doit être respectée pour le point (N) nodal respectif et
- effectuation de la simulation et
- adjonction du point (N) nodal respectif à l'ensemble des points (12) de mesure au moins nécessaires si le résultat de la simulation indique que la bande de tension donnée à l'avance a été enfreinte au point (N) nodal respectif.

**2.** Procédé suivant la revendication 1, **caractérisé en ce que** l'on installe respectivement des dispositifs de mesure de tension aux positions (12) déterminées du réseau (13) d'énergie.

**3.** Procédé suivant l'une des revendications précédentes, **caractérisé en ce que** l'on règle le dispositif (3) réglable à une position de réglage, qui exige, conformément au résultat, un nombre minimum de points (12) de mesure.

**4.** Procédé suivant l'une des revendications précédentes, **caractérisé en ce que** l'on utilise, comme dispositif (3) réglable, un transformateur de poste de transformation réglable.

**5.** Procédé suivant l'une des revendications 1 à 3, **caractérisé en ce que** l'on utilise, comme dispositif (3) réglable, un régleur de réseau.

**6.** Procédé suivant l'une des revendications 1 à 3, **caractérisé en ce que** l'on utilise, comme dispositif (3) réglable, un transformateur de réseau local réglable.

**7.** Système de détermination de points (12) de mesure dans un réseau (13) d'énergie, ayant une structure très hétérogène de producteurs d'énergie et de consommateurs d'énergie, dans lequel, dans le réseau (13) d'énergie, un dispositif (3) réglable peut être utilisé pour une régulation de tension dans un grand domaine,

comprenant un dispositif de simulation,

constitué pour mettre à disposition un modèle du réseau (13) d'énergie, le modèle indiquant une répartition de tension au sein du réseau (13) d'énergie, au moyen d'un système d'équations et/ou d'un système d'inéquations, en fonction de la position de réglage du dispositif (3) réglable et en ce que

le dispositif de simulation est constitué pour, à l'aide du modèle, effectuer une simulation pour minimiser le nombre de points (12) de mesure et dans lequel le dispositif de simulation est constitué,

pour indiquer, en résultat de la simulation, un nombre minimum et la position respective de points (12) de mesure, ainsi que la position de réglage du dispositif (3) réglable, afin de pouvoir respecter, pour le réseau (13) d'énergie en fonctionnement, une bande de tension donnée à l'avance, **caractérisé en ce que** le dispositif de simulation est constitué,

pour répéter, dans la simulation pour toutes les positions de régulation du dispositif (3) réglable et respectivement pour tous les points (N) nodaux du réseau (13) d'énergie, les stades suivants :

- suppression de la condition du système d'équations et/ou du système d'inéquations qu'une bande de tension donnée à l'avance doit être respectée pour le point (N) nodal respectif et
- effectuation de la simulation et
- adjonction du point (N) nodal respectif à l'ensemble des points (12) de mesure au moins nécessaires si le résultat de la simulation indique que la bande de tension donnée à l'avance a été enfreinte au point (N) nodal respectif.

8. Système suivant la revendication 7, **caractérisé en ce que** le système comprend un réseau (13) d'énergie et des dispositifs de mesure de tension sont prévus respectivement aux positions (12) déterminées du réseau (13) d'énergie.

9. Système suivant l'une des revendications 7 ou 8, **caractérisé en ce qu'**il est prévu un dispositif (3) réglable, qui est réglé sur une position de réglage, la position de réglage exigeant, suivant le résultat, un nombre minimum de points (12) de mesure.

10. Système suivant l'une des revendications 7 à 9, **caractérisé en ce que** le dispositif (3) réglable est un transformateur de poste de transformation réglable.

11. Système suivant l'une des revendications 7 à 10, **caractérisé en ce que** le dispositif (3) réglable comprend un régleur de réseau.

12. Système suivant l'une des revendications 7 à 10, **caractérisé en ce que** le dispositif (3) réglable comprend un transformateur (RONT) de réseau local réglable.

FIG 1

N38

N27 · 11
N28 · 11 · 12
N40 · 11 · 12
5

N56 · 11
N57 · 11 · 12
N59 · 11 · 12
6

N47
N48
N46 · 12
7

N51 · 11
N52 · 11
N50 · 11 · 12
8

N62
N63
N61
9

N66 · 11
N67
N65
10

1
2
3
4

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 15178794 A

**In der Beschreibung aufgeführte Nicht-Patentliteratur**

- **YU XIANG et al.** Optimization of State-Estimator-Based Operation Framework including Measurement Placement for Medium Voltage Distribution Grid. *IEEE Transactions on Smart Grid,* November 2014, vol. 5 (6

- **CARLOS MUSCAS et al.** Optimal Placement of Measurement Devices in Electric Distribution Systems. *IMTC 2006 - Instrumentation and Measurement Technology Conference,* 27. April 2006
- **JOZSEF VARGA.** *Angewandte Optimierung,* 1991